# FASCICULE DE BREVET EUROPEEN

(11) **EP 1 125 502 B1**
(45) Date de publication et mention de la délivrance du brevet: **06.11.2002**
(21) Numéro de dépôt: 01400127.5
(22) Date de dépôt: 17.01.2001
(51) Int. Cl.: A22B 5/20

(54) **Installation de découpe à poste mobile**
Vorrichtung zum Spalten mit einem beweglichen Stand
Splitting apparatus with movable station

(30) Priorité: 18.02.2000 FR 0002041
(43) Date de publication de la demande: 22.08.2001
(73) Titulaire: DURAND INTERNATIONAL, 07210 Baix Chomerac (FR)
(72) Inventeur: Torrelli, Didier, 07500 Guilherand Granges (FR)
(74) Mandataire: Geismar, Thierry

(56) Documents cités:
- EP-A- 0 801 900
- FR-A- 2 535 944
- US-A- 4 653 150
- US-A- 5 655 960

## Description

La présente invention est relative au domaine général de l'abattage d'animaux de boucherie et elle concerne, plus particulièrement, l'opération de découpe d'une carcasse après la phase d'éviscération.

Plus spécifiquement, l'objet de l'invention concerne la découpe de carcasses d'animaux tels que des porcins, ovins ou bovins.

L'opération de découpe d'une carcasse d'animal se pratique typiquement en suspendant la carcasse verticalement par les pattes arrière et en exécutant l'opération de découpe le long de la colonne vertébrale au moyen d'un outil de coupe, tel que des couteaux ou un scie circulaire, selon un procédé de découpe automatique permettant d'atteindre des cadences de travail compatibles avec les exigences des abattoirs industriels.

Un tel procédé consiste à faire défiler les carcasses, suspendues par l'intermédiaire d'un transporteur ou convoyeur, devant un poste d'intervention comprenant en une machine automatique comportant un organe de coupe pouvant être introduit entre les pattes arrière de la carcasse suspendue pour agir selon un plan de coupe vertical en exécutant la découpe en deux demi carcasses.

On connaît déjà des installations de découpe dans lesquelles l'opération de découpe peut intervenir à poste fixe ou à la volée, c'est-à-dire en combinant le déplacement vertical de l'organe de coupe avec le déplacement latéral de la carcasse lorsque le transporteur ou convoyeur est animé d'un défilement continu. Cette opération permet de découper une carcasse d'animal de boucherie en deux demi carcasses qui sont séparées de manière à être dirigées ultérieurement vers d'autres postes d'intervention.

Selon les besoins liés aux traitements des carcasses ultérieurs à la découpe, ou les moyens mis en oeuvre pour assurer la suspension de la carcasse sur le transporteur, on souhaite exécuter la découpe de la carcasse en laissant subsister une liaison entre les deux demi carcasses. L'exécution de la découpe est volontairement limitée à la majeur partie de la carcasse sans atteindre toutefois la totalité pour éviter d'obtenir deux demi carcasses entièrement séparées. Cette découpe est dite américaine.

Tel est le cas, par exemple, lorsque la carcasse est suspendue au transporteur par l'intermédiaire d'un support de type pendulaire ou tinet ne possédant qu'une seule articulation pour un palonnier de suspension unique aux extrémités des bras duquel sont fixées les pattes arrière de la carcasse. La découpe, si elle est effectuée entièrement, produit deux demi carcasses qui sont affectées d'un mouvement pendulaire incontrôlable ayant une incidence néfaste sur la stabilité et la reprise ultérieure. On souhaite donc n'exécuter la découpe de la carcasse que sur la majeure partie en laissant subsister une liaison, typiquement au droit de l'extrémité inférieure à proximité de la tête, ou à partir du milieu du dos avec une zone de couenne dorsale non découpée. Cette extrémité inférieure est typiquement la partie terminale inférieure du rachis si la tête a été ôtée. La découpe doit en tout cas permettre de couper tous les os de la colonne vertébrale, les deux demi carcasses étant reliées après la découpe par une zone non osseuse : on souhaite obtenir une liaison sans os au niveau du rachis.

Les abattoirs industriels ont donc besoin de moyens permettant de réaliser une découpe automatique limitée, en adoptant une cadence de travail élevée et quelle que soit la longueur des carcasses se présentant au poste d'invention.

Dans l'art antérieur, on connaît par exemple la machine décrite dans le document FR-2 535 944. Cette machine comprend deux ensembles fixes, ce qui ne permet pas une cadence très élevée souhaitée de l'ordre de 500 à 600 animaux par heure obtenue grâce à la présente invention.

Cette machine décrit une première colonne comprenant l'organe de coupe, et en vis-à-vis, une seconde colonne comprenant un organe de guidage dorsal externe lors de la découpe. Une liaison mécanique est réalisée entre l'organe de coupe et l'organe de guidage externe, lors de la découpe. Le chariot vertical de guidage est solidaire du chariot de guidage dorsal. Ceci ne permet donc pas un contrôle indépendant entre ces deux organes.

On connaît également une machine dynamique décrite dans le document US-5 655 960, permettant d'atteindre des cadences élevées. Toutefois, le bras de support de l'organe de coupe, lorsqu'il atteint la partie extrême inférieure de la carcasse, peut venir en butée et abîmer cette partie extrême inférieure. De plus, lors de la fin de la découpe, les galets de guidage externe ne suivent pas la face externe dorsale de l'animal, et donc ne guident plus, jusqu'à la fin de cette découpe.

L'installation selon l'invention vise un contrôle indépendant du déplacement de l'organe de guidage externe, de l'organe de coupe, et de l'organe de guidage interne. De plus, l'installation vise à assurer un positionnement strictement en vis à vis de l'organe de guidage externe par rapport à la lame de coupe et l'organe de guidage interne. L'invention vise ainsi un contrôle précis du positionnement à la fois horizontal et vertical entre l'organe de découpe et l'organe de guidage externe, et ce pour des cadences élevées jusqu'à 500 à 600 animaux par heure.

L'invention vise de plus un guidage externe optimal lors de la découpe, l'organe de guidage externe étant apte à épouser la forme de la face externe jusqu'à la fin de la découpe.

Selon un premier aspect, l'invention a pour objet l'installation à poste mobile de découpe de carcasses d'animaux de boucherie, notamment les porcs, suspendus à un transporteur par les pattes arrière, comprenant deux colonnes en vis à vis définissant entre elles un espace dans lequel défilent en continu les animaux à découper, ces deux colonnes étant mobiles suivant une certaine course dans la direction de déplacement des carcasses, et dans la direction inverse, l'une des colonnes dite d'appui portant un dispositif d'appui comportant des moyens venant en appui sur la face externe dorsale de la carcasse au niveau de la colonne vertébrale, suivant la découpe, l'autre colonne dite de découpe portant d'autre part un dispositif de découpe comportant des moyens de découpe introduits par la face ventrale sous la queue et mobile verticalement, et d'autre part un dispositif de guidage interne comportant des moyens de guidage situés sous les moyens de découpe introduits par le côté ventral de la carcasse en agissant à l'encontre des moyens d'appui, l'installation comprenant un dispositif de commande et d'asservissement du déplacement du dispositif de guidage interne, du dispositif d'appui et du dispositif de découpe, le dispositif de commande et d'asservissement étant apte à permettre un déplacement indépendant des moyens d'appui et des moyens de découpe, les moyens d'appui étant mobiles verticalement lors de la découpe.

Selon un mode de réalisation préféré de l'invention, l'installation comprend des moyens de solidarisation de la colonne de découpe et de la colonne d'appui, la colonne de découpe et la colonne d'appui formant un ensemble monobloc, de manière à assurer le positionnement souhaité en vis-à-vis des moyens d'appui externe, des moyens de découpe et des moyens de guidage interne lors de la découpe.

La colonne de découpe comprend une colonne élévatrice mobile en translation parallèlement à la direction horizontale de défilement des carcasses à l'aide de premiers moyens d'entraînement du type moteur, un chariot élévateur mobile en translation verticale par rapport à la colonne mobile à l'aide de deuxièmes moyens d'entraînement du type moteur, et une poutre porteuse du dispositif de découpe, mobile par rapport au chariot élévateur pour être amenée à partir d'une position d'effacement à une position de découpe, à l'aide de troisièmes moyens d'entraînement du type vérin hydraulique, les premiers, deuxièmes et troisièmes moyens d'entraînement étant distincts et reliés à un automate du dispositif de commande et d'asservissement qui commande également l'actionnement des moyens de découpe.

La colonne d'appui comprend un châssis élévateur mobile parallèlement à la direction horizontale de défilement à l'aide de quatrième moyens d'entraînement, un châssis de support du dispositif d'appui, mobile verticalement par rapport au châssis élévateur à l'aide de cinquièmes moyens d'entraînement, les moyens de solidarisation reliant la colonne mobile et le châssis élévateur par le haut ou par le bas, les quatrièmes et cinquièmes moyens d'entraînement étant distincts et reliés au distributeur automate du dispositif de commande et d'asservissement qui commande également l'actionnement de l'organe de coupe.

Selon un autre mode de réalisation, la colonne de découpe comprend un premier châssis élévateur mobile en translation verticale par rapport à une structure fixe, supportant un châssis de découpe mobile en translation horizontale par rapport au premier châssis élévateur parallèlement à la direction de défilement des carcasses, le châssis de découpe supportant la poutre porteuse de l'organe de coupe elle même mobile transversalement à la direction de défilement des carcasses. La colonne d'appui comprend un second châssis élévateur, mobile en translation verticale, supportant le châssis d'appui externe mobile en translation horizontale par rapport à ce second châssis élévateur, le châssis d'appui supportant l'organe de guidage qui est mobile transversalement à la direction de défilement des carcasses. Les moyens de solidarisation de l'ensemble monobloc formé par la colonne de découpe et la colonne d'appui peuvent se déplacer dans une gorge située dans le sol.

Selon une réalisation, les troisièmes moyens d'entraînement comprennent un vérin entrée/sortie permettant le déplacement relatif des moyens de guidage interne par rapport aux moyens de découpe.

Le dispositif de guidage interne comprend deux galets de guidage supérieurs et deux galets de guidage inférieurs montés sur un même bras de support, et le dispositif d'appui comprend un palonnier externe d'appui escamotable à partir d'une position de dégagement à une position d'appui contre la face dorsale de la carcasse, le palonnier portant deux galets d'appui supérieurs et deux galets d'appui inférieurs, les galets d'appui étant antagonistes des galets de guidage.

Le dispositif de commande comprend des moyens de contrôle de la position des moyens de découpe et des moyens d'appui, et est apte à commander les moyens d'entraînement selon des profils de vitesse et/ou de position prédéterminés, ou calculés pour chaque carcasse.

Selon une réalisation, les moyens de contrôle comprennent un dispositif de détection de la partie extrême basse de la carcasse apte à commander le recul des moyens de découpe.

Selon une variante de la réalisation, le dispositif de détection comprend un élément émetteur de faisceau lumineux porté par un bras fixé à la poutre porteuse, et un élément récepteur fixé à la partie inférieure du châssis de support de l'organe de guidage interne, de manière que la carcasse à découper intercepte le faisceau lumineux jusqu'à la position souhaitée de découpe
Selon une autre variante de réalisation, le dispositif de détection comprend deux galets inférieurs montés sur un moyen de détection actionné par une tige de vérin, le déplacement du moyen de détection jusqu'à une position seuil commandant le recul des moyens de découpe.

Selon une variante, le moyen de détection est un palonnier portant les galets supérieurs de guidage et les galets inférieurs de guidage, l'axe de rotation des galets inférieurs et l'axe de rotation des galets supérieurs des moyens de guidage étant mobiles par rapport à l 'axe de rotation de l'organe de découpe.

Selon une autre variante, le moyen de détection est un levier portant les galets inférieurs de guidage, l'axe de rotation des galets supérieurs étant fixe par rapport à l'axe de rotation de l'organe de coupe, tandis que l'axe de rotation des galets inférieurs est mobile par rapport à l'axe de rotation de l'organe de coupe.

Selon une réalisation, l'axe de rotation des galets du palonnier externe d'appui lors de la découpe est sensiblement parallèle à la face dorsale de la carcasse.

Selon une autre réalisation, l'axe de rotation des galets du palonnier externe d'appui lors de la découpe est dirigé vers, en faisant un angle voisin de 30° avec, la face dorsale de la carcasse, les galets étant tronconiques, permettant un recentrage des chairs et des apophyses avant le passage de la lame de scie.

Typiquement, l'organe de coupe comprend une scie rotative de 300 à 600 mm de diamètre, utilisable notamment pour les coches et les veaux, ou des couteaux de fendage.

Selon un mode de réalisation, l'installation comprend un dispositif de protection des jambons de la carcasse, comportant des moyens de protection escamotables, portés par la colonne élévatrice fixes par rapport à la carcasse, destinés par un mouvement de basculement ou autre par dessus les jambons, à coopérer avec au moins une zone de réception fixe par rapport à la carcasse de la colonne d'appui, de manière à maintenir écartés les jambons en évitant leur contact non souhaité avec la poutre porteuse.

Selon un deuxième aspect, l'invention a pour objet un procédé mettant en oeuvre une installation telle que revendiquée, comprenant les étapes de :
- mesure de la carcasse, le corps de l'animal étant entier, avec ou sans tête, non fendu du côté de la colonne vertébrale, et détection du début de la découpe ;
- actionnement du dispositif de commande et d'asservissement ;
- déplacement conséquemment de la colonne de découpe et de la colonne d'appui, de manière à déplacer le dispositif de découpe et le dispositif d'appui dans les trois directions de l'espace, les moyens d'appui étant appliqués contre la face dorsale externe de l'animal et l'organe de découpe effectuant la découpe, la carcasse étant déplacée simultanément à la découpe ;
- détection de la position de fin de découpe ;
- arrêt de la découpe, évacuation de la carcasse découpée et retour en position initiale de l'organe de coupe et de l'organe d'appui pour la carcasse suivante.

Selon une réalisation, la détection de fin de découpe est effectuée en fonction de l'application du dispositif de guidage interne sur la partie extrême terminale de la carcasse.

Selon une réalisation, on réalise un déplacement relatif du dispositif de découpe et du dispositif de guidage externe selon une direction générale verticale et un sens tels que les moyens de guidage externe assurent un guidage externe jusqu'à la fin de la découpe.

D'autre objets et avantages de l'invention apparaîtront au cours de la description qui va être faite en référence aux figures annexées dans lesquelles :
- La figure 1 représente une vue générale en perspective d'une installation selon un premier mode de réalisation de l'invention.

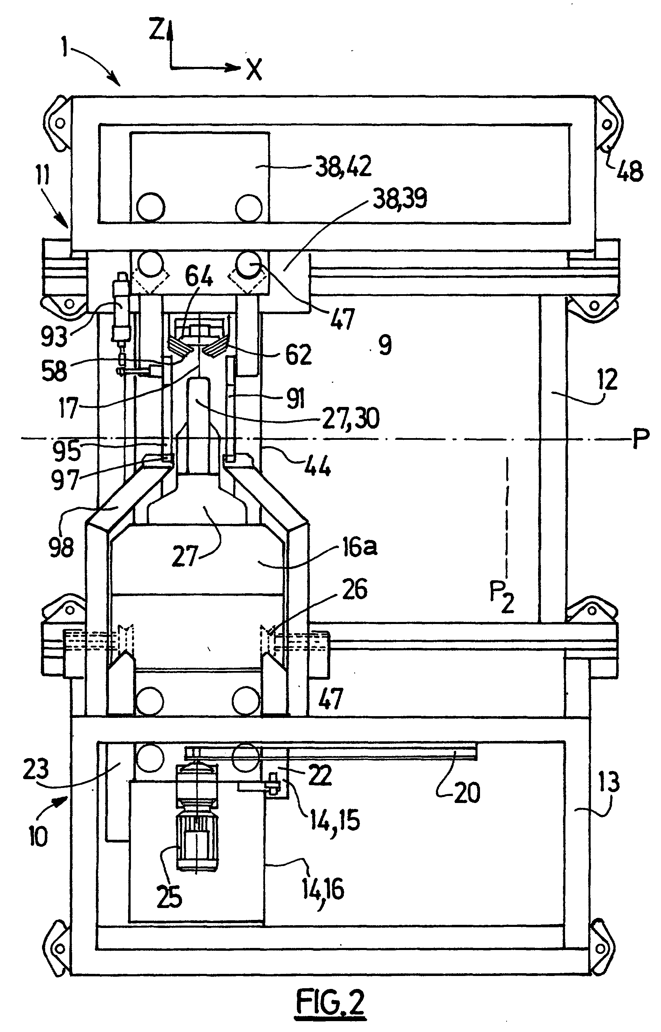

- La figure 2 représente une vue de dessus de l'installation de la figure 1.
- Les figures 3a à 3i représentent un cycle de fonctionnement de l'installation selon un deuxième mode de réalisation de l'invention, illustrant la variation pendant la coupe de la position relative entre le dispositif de guidage externe et la tête de coupe.
- Les figures 4a à 4e illustrent un cycle de fonctionnement de l'installation selon un troisième mode de réalisation.
- La figure 5 représente en agrandissement une position intermédiaire de coupe selon le mode de réalisation de la figure 2.
- La figure 6 représente en agrandissement le dispositif de détection, de la fin de coupe selon le mode de réalisation des figures 4a à 4e.

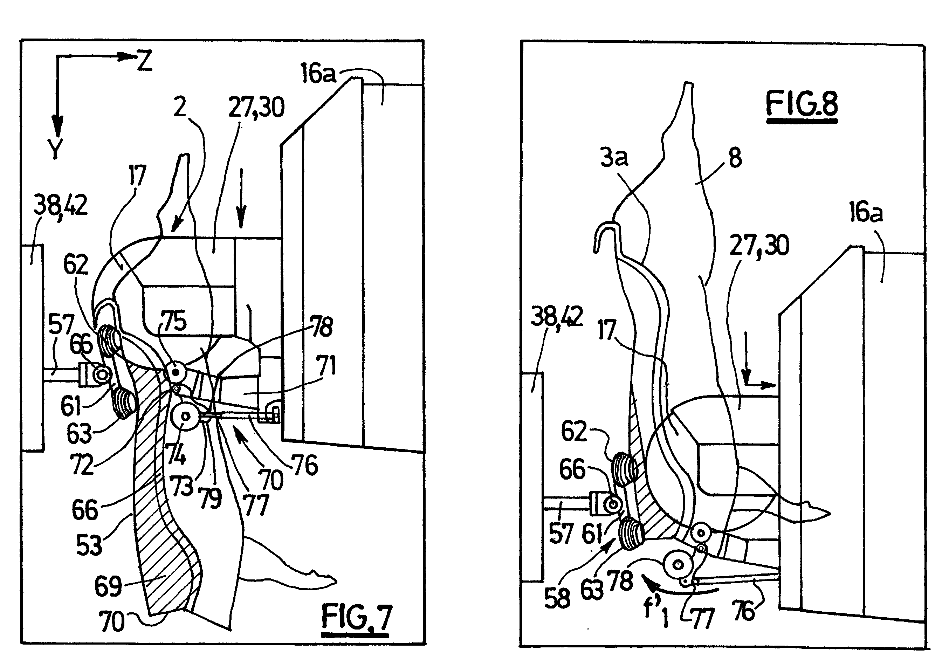

- Les figures 7 et 8 représentent en agrandissement les figure 4c et 4f.

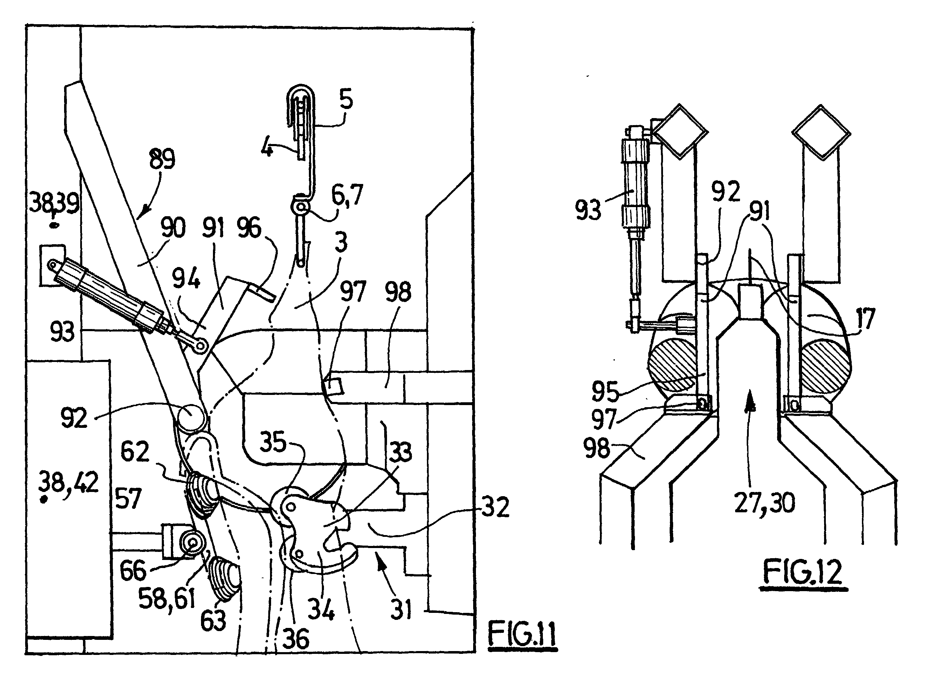

- Les figures 9 et 11 représentent en coupe, les moyens de protection des jambons respectivement en position d'engagement et de dégagement de ces moyens de protection en début de coupe selon un mode de réalisation.

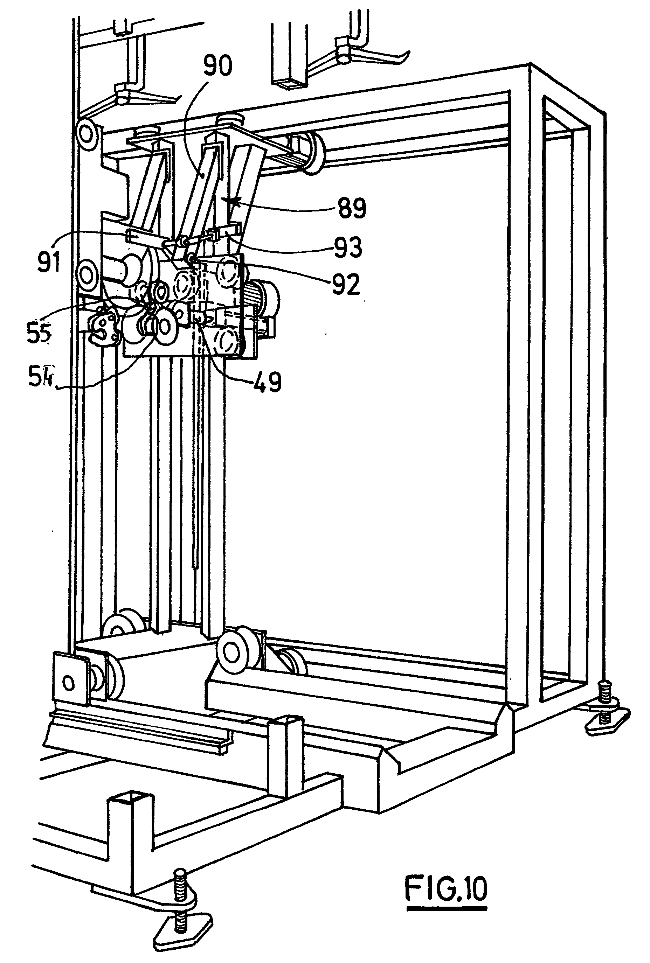

- La figure 10 représente une vue générale en perspective de l'installation de la figure 1 utilisant les moyens de protection.
- La figure 12 représente en vue de dessus le fonctionnement des moyens de protection
- La figure 13 est une vue schématique du dispositif de guidage externe selon un mode de réalisation.

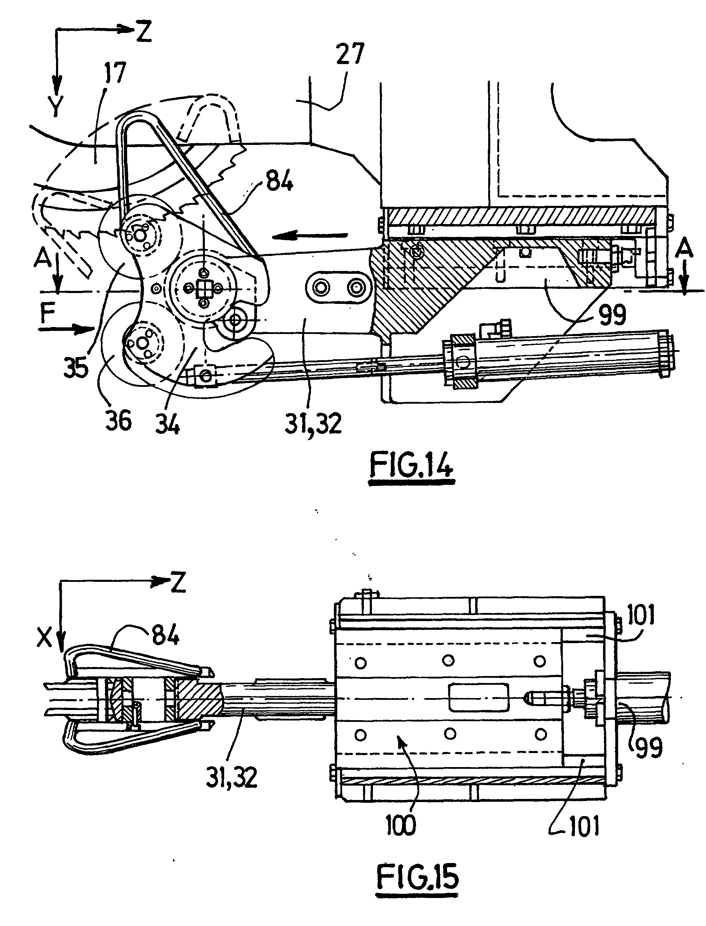

- La figure 14 représente une vue horizontale en agrandissement, le système de guidage interne coulissant de l'organe de guidage interne.
- La figure 15 est une selon la coupe A-A de la figure 14.

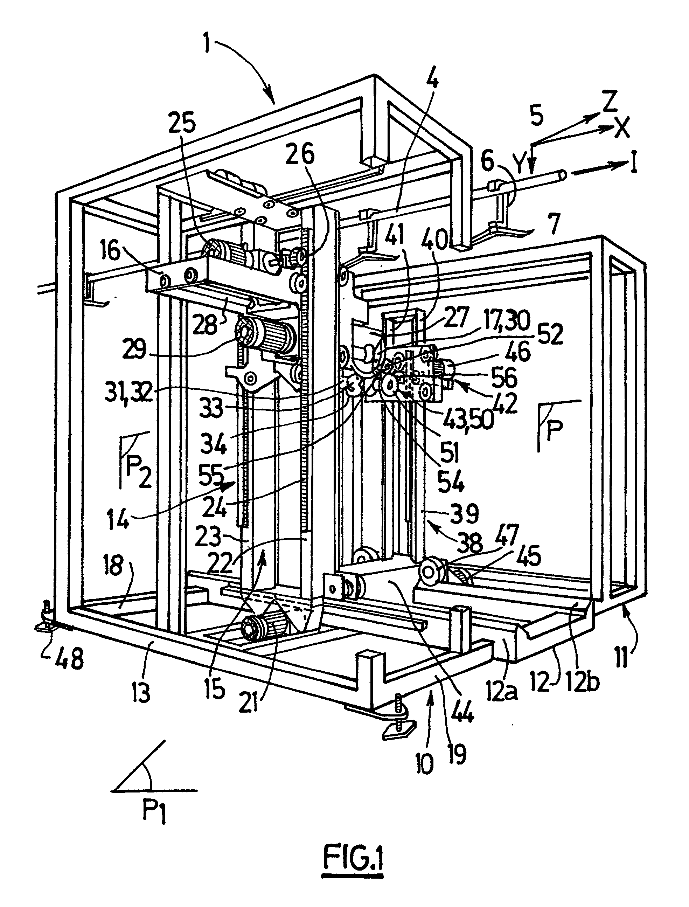

La figure 1 montre une installation de découpe par sciage d'une carcasse 2 d'animal de boucherie suspendue par les pattes arrière 3 à un transporteur 4 à défilement continu ou discontinu.

Ce transporteur 4 peut être constitué par un convoyeur de forme et de construction appropriées, permettant de suspendre et de déplacer la carcasse 2 selon une direction D par l'intermédiaire d'un moyen de suspension 5 tel qu'un tinet à deux branches 6, 7 aux extrémités duquel les pattes arrière 3 sont accrochées. La direction D s'inscrit dans un plan P vertical de défilement des carcasses 2.

La suspension de la carcasse 2 est réalisée de façon telle qu'elle présente sa face ventrale 8 au regard des postes d'intervention de la ligne d'abattage parmi lesquels se situe un poste 9 mobile de découpe.

L'installation 1 comprend un premier ensemble 10 appelé ensemble de découpe, et en regard, un deuxième ensemble 11 appelé ensemble d'appui ou de guidage externe. Lors de leur défilement, les carcasses ont leur face dorsale externe 53 tournée vers le deuxième ensemble 11 et leur face ventrale 8 tournée vers le premier ensemble 10. Les carcasses 2 arrivent, éviscérées, par le transporteur 4.

La découpe se fait soit en laissant subsister après la découpe une liaison entre les deux demi carcasses par une partie non osseuse non découpée de l'animal, soit totalement sur toute la longueur de l'animal.

L'ensemble de découpe 10 comprend d'une part un châssis ou colonne de découpe 14 mobile en translation parallèlement à la direction de défilement des carcasses.

L'ensemble de découpe 10 comprend d'autre part une structure ou un portique 13 fixe. La colonne de découpe 16 est mobile par rapport au portique 13. Dans la réalisation représentée, le portique comporte quatre montants verticaux, quatre montants horizontaux inférieurs et quatre montants horizontaux supérieurs, de manière à former une cage. D'autres réalisations de cette structure sont possibles, l'objet étant d'avoir une colonne de découpe mobile en translation par rapport à une structure fixe.

Cette colonne de découpe 14 comprend elle-même une colonne élévatrice mobile de monte et baisse 15 et un chariot élévateur 16 qui supporte une poutre porteuse 27 de l'organe de découpe 17 tel qu'une scie.

Le portique 13 est apte à assurer le guidage de la colonne mobile 15 du châssis de découpe 14 qui peut être déplacée selon un plan horizontal P1 entre une première position extrême à proximité d'un montant 18, à une deuxième position extrême à proximité d'un montant 19, à l'aide de moyens de guidage 20 tels que des glissières, et de premiers moyens moteurs d'entraînement horizontal 21 tels qu'un moteur.

On définit les trois directions de l'espace X, Y, Z. La direction X est la direction horizontale de défilement des carcasses et s'inscrit dans le plan P. Y est la direction verticale dans un plan P₂ transversal au plan P.

La colonne élévatrice mobile 15 comprend deux montants porteurs 22, 23. Les montants 22, 23 supportent à l'aide d'un moyen de guidage 24 tel qu'un profilé en « V », le chariot élévateur 16 qui est destiné à se déplacer par rapport à la colonne 15 selon la direction verticale Y entre une première position extrême haute en début de découpe et une deuxième position extrême basse en fin de découpe.

Ce déplacement vertical se fait à l'aide de deuxièmes moyens d'entraînement tels qu'un moteur 25 placé sur le chariot élévateur 16 qui supporte également des pignons 26 engrenant les crémaillères 24. On pourrait également utiliser par exemple un système cables-courroies.

La poutre porteuse 27 est mobile transversalement par rapport à la direction de défilement des carcasses D, à l'aide de moyens de guidage tels que des arbres ou douilles à billes 28, et de troisièmes moyens d'entraînement tels qu'un vérin entrée/sortie implanté dans le chariot élévateur 16 au-dessus des arbres 28 non visible sur la figure 1, selon le plan P2 de découpe, le plan P2 se déplaçant avec la carcasse lors de la découpe.

La poutre porteuse 27 porte l'organe de coupe 17 constitué par exemple par une scie circulaire 30 susceptible d'être animée, dans le plan P₂, d'un mouvement de rotation par l'intermédiaire d'un organe moteur 29 porté par la poutre porteuse 27.

L'organe de coupe 17 peut également comprendre des couteaux animés d'un mouvement d'oscillation alternative dans le plan P2, tel que décrit également dans des documents disponibles de l'art antérieur.

L'ensemble de découpe 10 comprend par ailleurs un dispositif de guidage interne 31 supporté par la poutre porteuse 27.

Ce dispositif de guidage 31 interne est porté en dessous et légèrement en retrait de l'organe de coupe 17.

Ce dispositif de guidage 31 comprend un bras 32 portant, par un axe de pivotement horizontal 33 un palonnier interne 34 supportant des galets superposés, une paire de galets supérieurs 35 et une paire de galets inférieurs 36. Le fonctionnement de ces galets sera décrit plus loin.

Par ailleurs, l'ensemble d'appui 11 comprend d'une part un châssis ou colonne d'appui 38 qui comprend elle-même un châssis élévateur 39 à deux montants 40, 41, et un châssis support 42 du dispositif de guidage externe ou d'appui 43 qui va être décrit. La colonne d'appui 38 est mobile en translation parallèlement à la direction de défilement des carcasses.

L'ensemble d'appui 11 externe comprend d'autre part une structure, ici un portique 37, fixe qui peut être analogue au ou différent du portique 13. La colonne d'appui 38 est mobile par rapport à la structure 37.

Le châssis ou colonne de découpe 14 de l'ensemble de découpe 10 et le châssis ou colonne de guidage 38 de l'ensemble de guidage 11 sont reliés par un châssis de liaison tel qu'une embase 44, de manière à former un ensemble monobloc. La colonne de découpe 14 et la colonne d'appui externe 38 ne forment donc pas deux châssis mobiles indépendants, mais au contraire un châssis unique mobile par rapport aux structures 13,37 fixes.

L'embase de liaison 44 entre les deux colonnes 14, 38 est mobile selon la direction D par rapport aux structures 13, 37, à l'aide de moyens de guidage tels que des traverses de guidage 12a, 12b d'un socle 12 qui font respectivement partie des ensembles 11,13, et de roues 47. Cette réalisation est une réalisation avantageuse de l'invention : avec une telle embase 44, le positionnement relatif, strictement en vis-à-vis, de l'organe de coupe 17 et de l'organe d'appui externe 43, et donc la géométrie qui en découle, sont garantis.

On peut en effet prévoir une installation de découpe dont l'organe de guidage externe dorsal et l'ensemble lame de coupe et organe de guidage interne sont totalement distincts, le châssis ou colonne 14 qui supporte l'organe de coupe 17 se déplaçant indépendamment du châssis ou colonne d'appui 38 qui supporte de l'organe de guidage externe, en cas d'absence de moyens de solidarisation tels que l'embase 44. Mais dans ce cas, on peut rencontrer des difficultés liées à l'asservissement de ces deux colonnes, en particulier au fonctionnement des moyens de synchronisation dans les trois dimensions nécessaires au déplacement de ces deux colonnes séparées. De plus lors de l'utilisation notamment à des fréquences de découpe élevées, des problèmes peuvent se poser : usure différentielle entre les colonnes, défaut de fonctionnement, résistance mécanique, arrêt d'urgence notamment. En outre, le montage, le réglage et la réparation nécessaire lors de dysfonctionnements peuvent être longs et complexes.

On revient au mode de réalisation de la figure 1. Le châssis élévateur 39 et donc le châssis de guidage 38, sont mobiles en translation horizontale, étant déplacés selon la direction X, à l'aide des moyens d'entraînement 21 de la colonne mobile 15 reliée par l'embase 44 au châssis élévateur 39, et/ou à l'aide de quatrièmes moyens d'entraînement 45 tels qu'un moteur distinct du moteur 21.

Des cinquièmes moyens d'entraînement tels qu'un moteur 46 sont destinés au déplacement vertical du châssis de support 42 par rapport au châssis élévateur 39.

L'installation 1 comprend en outre des pieds 48 pour améliorer sa stabilité, et une cage de nettoyage 16a.

Dans ce premier mode de réalisation représentée en figure 1, le châssis de support 42 porte à sa partie extrême antérieure, c'est-à-dire orientée vers le plan de défilement des carcasses P, le dispositif d'appui 43 également désigné de guidage externe par opposition au guidage interne. Ce dispositif d'appui 43 comprend un bras mobile 49 en translation horizontale perpendiculairement au plan de défilement de la carcasse P, comme cela sera décrit par la suite.
Le bras mobile 49 porte, à sa partie extrême proche du plan P, un organe de guidage externe 50, et est animé de ce mouvement horizontal perpendiculaire par exemple par un vérin hydraulique, pneumatique ou analogue, à partir d'une position stable d'attente.

Le dispositif de guidage 50 comprend deux galets inférieurs 51, et deux galets supérieurs 52.

L'organe de guidage externe 43 est réalisé de manière telle que, pour coopérer avec la face externe évolutive dorsale 53 de la carcasse, il présente par l'organe de guidage 50, une zone d'appui s'adaptant de façon adéquate automatiquement à l'évolution de cette face dorsale 53.
Le dispositif de guidage 50 est destiné, lorsqu'il est adapté à l'extrémité libre du bras de guidage mobile 49, à être centré sur le plan de coupe P2.

L'organe de guidage 50 forme alors un palonnier destiné à être adapté à l'extrémité du bras mobile 49 sur un axe de pivotement 56. Les bras 54 et 55 du palonnier forment typiquement un angle d'une valeur comprise entre 100 et 180°.

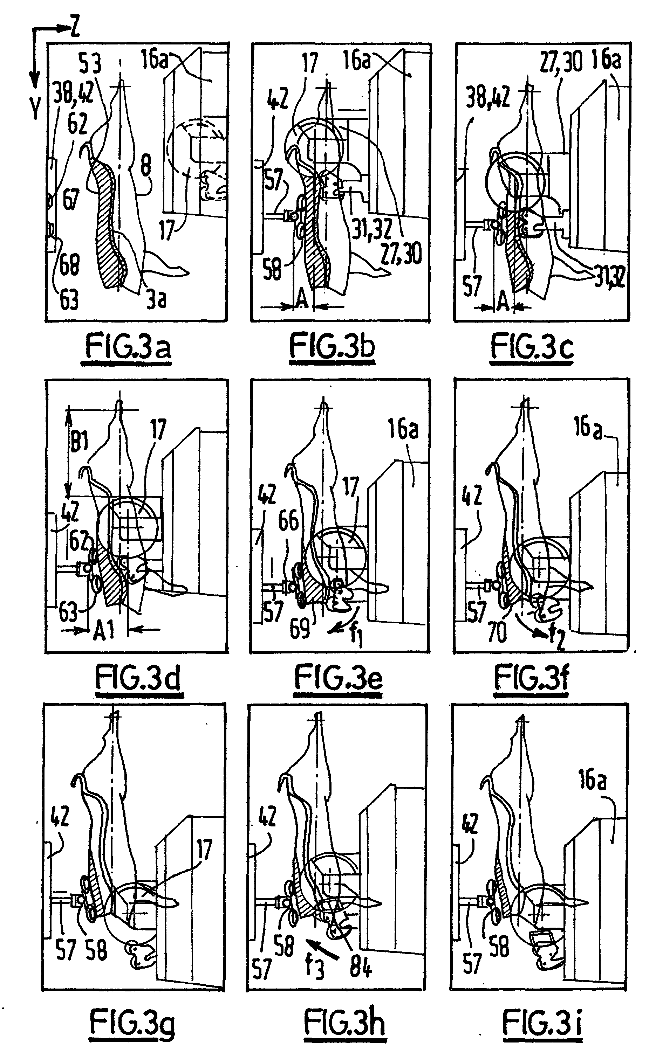

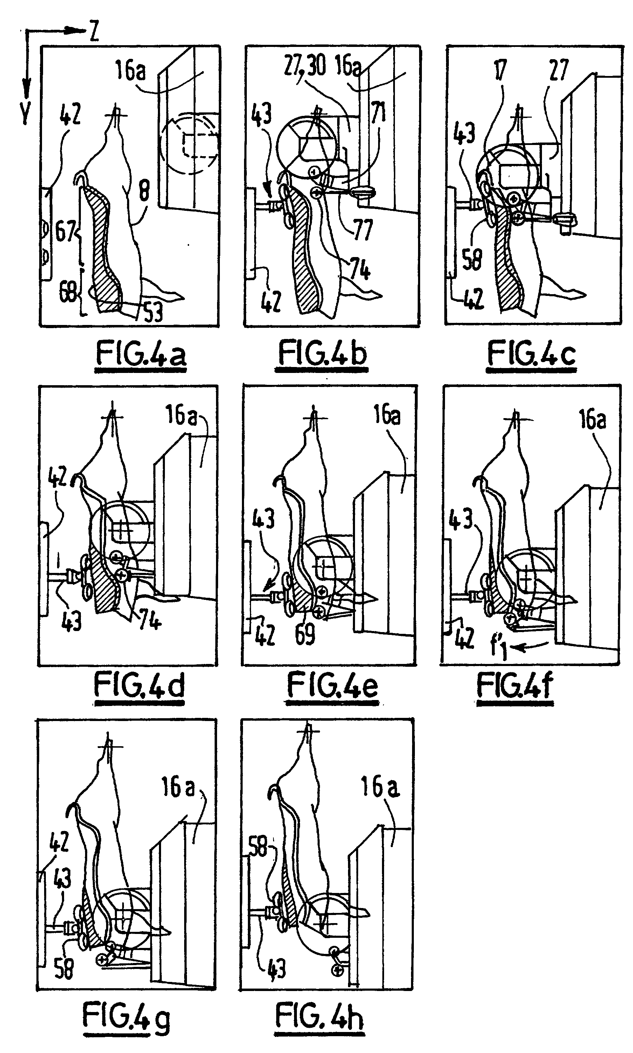

Lors de la découpe, la position du dispositif de guidage interne 31 et du dispositif de guidage externe 43 évolue comme représentée sur les figures 3a à 3i et 4a à 4e.

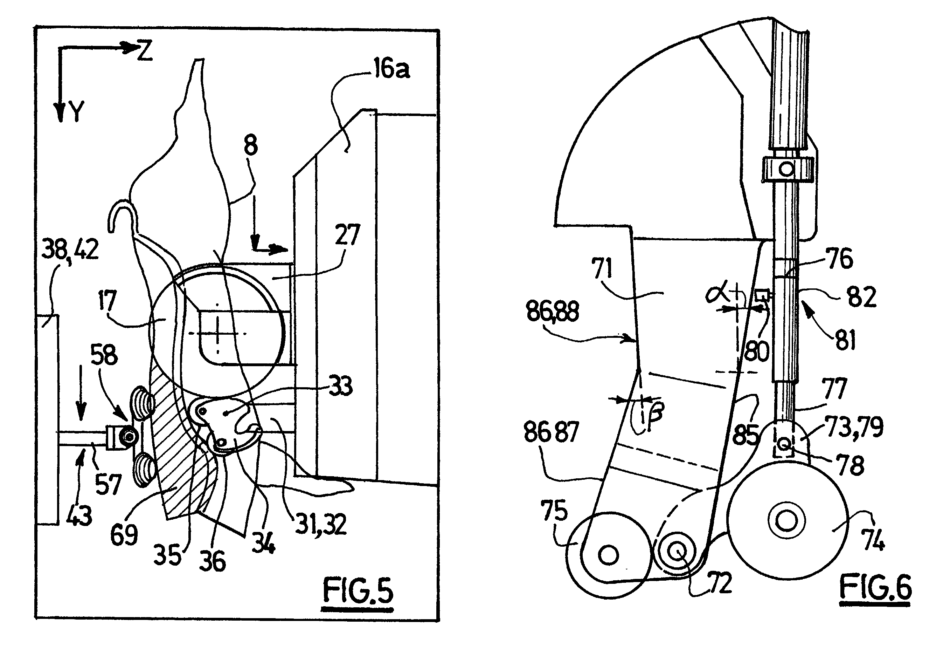

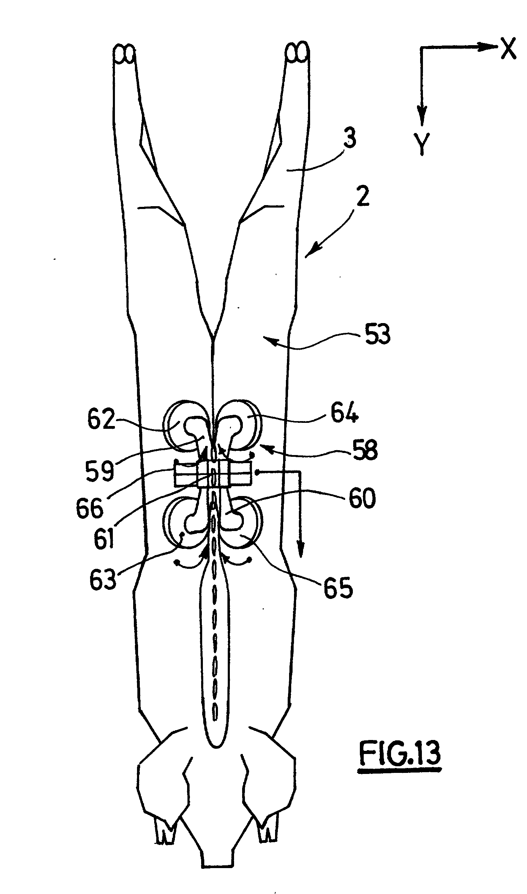

Selon un deuxième mode de réalisation représenté figures 5 et 13 par exemple, la structure du dispositif de guidage externe 43 est différente de celle du premier mode de réalisation. Le dispositif 43 comprend un bras 57, mobile perpendiculairement au plan P, supportant en rotation un palonnier 58 qui comporte deux branches 59, 60 reliées au niveau d'une zone de liaison 61. La branche 59 supporte un galet supérieur 62, et un galet inférieur 63. La branche 60 supporte un galet supérieur 64 et donc un galet inférieur 65.

Les quatre galets tronconiques 62, 63, 64, 65 sont mobiles en rotation selon un axe de rotation inclinés d'un angle α voisin de 30° avec le plan évolutif de la face dorsale de l'animal lors de la découpe, provoquant un effet de convergence qui centre les viandes et donc les apophyses pour la découpe.

Le palonnier 58 est mobile en pivotement autour de l'axe horizontal 66, de manière à suivre la conformation externe dorsale de la carcasse 2.

Les figures 3a à 3i illustrent le procédé de découpe d'une carcasse.

On a représenté la colonne de découpe 14 et la colonne de guidage 38, dans la zone de découpe. Pour simplifier la représentation, les opérations successives interviennent comme s'il s'agissait d'un poste fixe selon un mode statique. Toutefois, comme on l'a décrit grâce à la structure et à la commande de la colonne de découpe 14 et de la colonne de guidage 38, ces opérations se font selon les trois directions de l'espace, le fonctionnement étant qualifié de dynamique, le poste de découpe étant mobile. Simultanément à leur déplacement vertical lors de la découpe, la poutre porteuse 27 et l'organe de guidage 43 se déplacent horizontalement selon la direction de défilement, les colonnes 14 et 38 se déplaçant horizontalement en suivant le mouvement de la carcasse 2 déplacée par le transporteur 4.

De plus, la poutre porteuse 27 de la scie 17 est animée d'un mouvement pour l'amener à traverser le plan P et descendre le long de la colonne vertébrale 3a de la carcasse en la découpant.

Les paires de galets de guidage internes 35, 36 sont alors orientées en appui contre la face interne, le long de la colonne vertébrale 3a comme cela est illustré sur les figures 4b à 4g.
Du côté de la face externe dorsale 53 de la carcasse 2, le palonnier 58 d'appui vient s'appliquer en exerçant une force opposée à l'organe de guidage interne 31.
La découpe se poursuit du haut en bas de la carcasse, la scie 17 découpant la colonne vertébrale.

Lors de la découpe, l'organe de coupe 17 est commandé en rotation, et simultanément, le chariot élévateur 16 est animé d'un déplacement descendant de manière à découper la carcasse 2 selon le plan vertical de coupe P₂, et la poutre porteuse 27 se déplace selon la direction transversale Z lors de la progression de la découpe en s'éloignant du plan de défilement P.

Au cours de ces déplacements, l'organe de guidage interne 31 suit la conformation naturelle de la face interne de la carcasse 2 par l'intermédiaire de l'axe d'articulation 33, alors que l'organe de guidage externe 49 suit la conformation externe de la carcasse 2 par l'intermédiaire de l'axe horizontal 66 du bras 57.

Simultanément, l'organe de guidage interne 31 et le palonnier de guidage externe 58, au fur et à mesure de leur progression le long de la colonne vertébrale, agissent de manière antagoniste pour faire coïncider le plan de coupe P₂ et le plan de symétrie de chacune des vertèbres du rachis pour obtenir une division de la carcasse en deux demi carcasses.

L'installation selon l'invention comprend un dispositif de commande permettant la commande indépendante du déplacement vertical de l'organe de coupe 17 et du dispositif de guidage interne 31 d'une part, et du dispositif de guidage externe 43 d'autre part.

La liaison entre le dispositif de guidage interne 31 et l'organe de coupe 17 est fixe dans la direction verticale Y. Le dispositif de guidage 31 peut par contre se déplacer selon la direction Z par rapport à l'organe de coupe 17 comme cela va être décrit.
Le déplacement vertical du chariot élévateur 16 par rapport à la colonne élévatrice 15, est indépendant du déplacement vertical du châssis de support 42 par rapport au châssis élévateur 39.

Le procédé permet, par une commande indépendante, d'adapter une ligne d'appui de l'organe de guidage externe 43 comprenant le palonnier 58 de manière à offrir des surfaces d'appui adaptées à la morphologie de la face externe, sur toute la longueur de la découpe de la région sacro-lombaire 67 à la région dite dorsale 68.

Cette commande concerne d'une part le déplacement vertical de l'organe de coupe 17 et du dispositif de guidage interne 31. Ainsi, par exemple, comme l'illustrent les figures 4e et 4f, le palonnier 58, du dispositif de guidage externe 43 reste à une hauteur sensiblement identique sur ces deux figures, alors que l'organe de coupe 17 continue sa descente.

On obtient ainsi un meilleur guidage dans la partie extrême inférieure 69, l'appui sur la face dorsale 53 étant maintenu jusqu'à la fin de la découpe, en arrêtant la descente du dispositif d'appui 43, en particulier du palonnier de guidage externe 58, alors que la tête de coupe 30 continue de descendre pour suivre l'échine.

De même, entre les figures 4b et 4c, la variation de hauteur du dispositif de guidage externe, en particulier du bras 57 et du palonnier 58, est inférieure à la variation de hauteur de l'organe de découpe 17 et de l'organe de guidage interne 31 qui descendent le long de la carcasse 2.

On peut ainsi définir une vitesse de descente de l'organe de découpe 17 différente de la vitesse de descente de l'organe de guidage externe 43. On peut aussi définir avant le début de la découpe une position verticale de l'organe de coupe différente de celle de l'organe de guidage externe.
Cette commande concerne d'autre part le déplacement selon la direction Z transversale au plan P de défilement.

Ainsi, grâce au déplacement indépendant du dispositif de guidage externe 43 et de la scie 17, par exemple à l'aide d'un vérin entrée-sortie, on peut faire varier pendant la coupe la position relative de la scie 17 et du palonnier 58, selon cette direction Z. Par exemple la distance A entre l'axe de la tête de coupe 17 et l'axe du palonnier 58 sur la figure 3b, devient une distance A1 supérieure à la distance A sur la figure 3d, grâce au déplacement en retour vers le portique 37 de la poutre porteuse 27 de découpe.

On contrôle également la distance entre la lame de coupe et 17 et le dispositif de guidage interne 31, et plus précisément entre l'axe de la lame de coupe 17 et l'axe support 33 du palonnier 34 de guidage interne. Pour cela on utilise par exemple un vérin hydraulique 99 qui permet de modifier la position selon l'axe Z du palonnier 34. Le dispositif de guidage 31 est monté sur un chariot 100 coulissant par rapport à des rails 101 de guidage de la poutre porteuse 27. On obtient ainsi une poutre de guidage interne télescopique. On peut ainsi laisser une partie de couenne non découpée dans le dos de la carcasse. Selon une réalisation on peut aussi utiliser une motorisation capable de gérer ce déplacement relatif.

Le dispositif de commande et d'asservissement selon l'invention comprend par exemple un ordinateur et/ou un calculateur, monté par exemple sur l'ensemble de découpe 10. Le dispositif de commande comprend un automate convertisseur tel que numérique / analogique, reliant l'ordinateur / le calculateur aux moyens d'entraînement 21, 25, 29, 45, 46 des châssis mobiles.

En outre les moyens d'entraînement 21, 25, 29, 45, 46 à l'origine du déplacement des châssis mobiles de l'installation 2 sont reliés à des moyens de contrôle de la position de chacun des châssis mobiles.

Les premiers moyens d'entraînement 21 du mouvement longitudinal du châssis de découpe 14 sont contrôlés par des moyens de contrôle de la position longitudinale de la colonne élévatrice 15 selon la direction X.

Les deuxièmes moyens d'entraînement 25 du mouvement vertical du chariot élévateur 16 sont contrôlés par des moyens de contrôle de la position verticale de ce chariot 16 selon la direction Y.

Les troisièmes moyens d'entraînement de type vérin du mouvement transversal selon l'axe Z de la scie 17 sont reliés à des moyens de contrôle de la position de la scie selon la direction Z.

Les quatrièmes moyens d'entraînement 45 du mouvement longitudinal du châssis élévateur 39 sont synchrones avec les premiers moyens d'entraînement 21.

Les cinquièmes moyens d'entraînement 46 du mouvement vertical du châssis de support 42 sont reliés à des moyens de contrôle de la position verticale de ce châssis.

Les sixièmes moyens d'entraînement du mouvement transversal selon la direction Z du châssis de support 42 sont reliés à des moyens de contrôle de la position de l'organe de guidage 43.

Chacun de ces moyens de contrôle émet un signal approprié au dispositif de commande et d'asservissement.

Ces moyens de contrôle sont par exemple des capteurs lumineux inductifs sur cible pour le châssis de découpe 14 et le châssis de guidage interne 38.

On décrit maintenant la fin de découpe, dans le deuxième et le troisième mode de réalisation, et lorsque l'on utilise une détection de fin de coupe par un système de type rétro-pivotement du palonnier de guidage interne.
Dans un tel cas, on prévoit que le déplacement vertical de l'organe de coupe 17 a pour résultat de découper la carcasse au niveau de la colonne vertébrale 3a, mais aussi de la partie dorsale externe à cette dernière et par suite si cette opération intervient sans autre limitation, jusqu'à la partie basse extrême 69 de la carcasse, celle-ci sera découpée en deux demi carcasses séparées. Pour éviter un tel résultat, on détecte l'extrémité de la carcasse 70, grâce au dispositif de guidage interne 31, avant que l'organe de coupe ne coupe cette partie extrême.

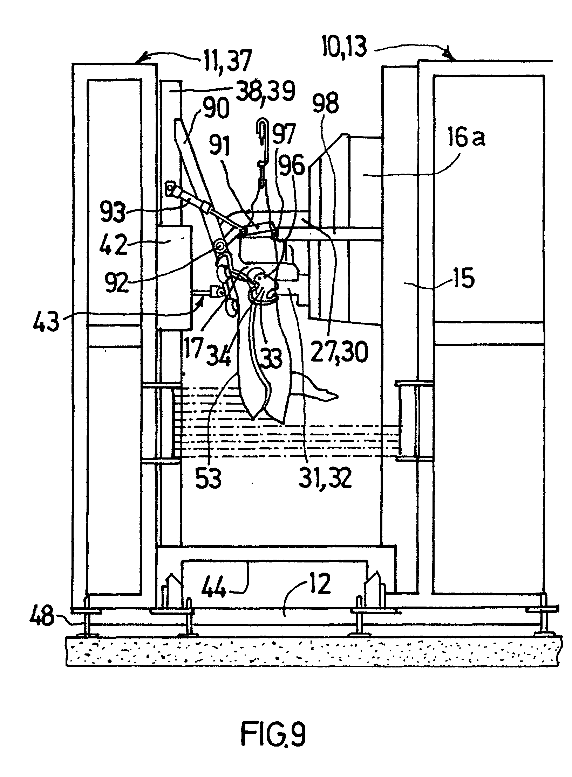

Dans la réalisation représentée en figures 3, 4 et 5, le dispositif de guidage interne 31 est tel que, lors de la fin de la découpe, le palonnier 34 subit un pivotement des galets supérieurs 35 et des galets inférieurs 36. Lorsque à partir de la position illustrée en figure 3e, le dispositif de guidage interne 31 arrive à proximité de l'extrémité inférieure 70 de la carcasse, constituée par la partie cervicale en l'absence de tête, les galets inférieurs 36 échappent de la carcasse (figure 8) de sorte que le palonnier 34 est sollicité en rétro-pivotement selon la flèche f1 sur une plage angulaire nettement inférieure à celle de la circulation qu'il connaît lors du suivi du rachis. Ce déplacement permet la détection de la fin souhaitée de découpe, qui permet d'enclencher le cycle de fin de coupe où la position de la scie est reculée par rapport au guidage externe : la poutre porteuse 27 est commandée pour se retirer vers le portique 13, la lame 17 reculant en s'éloignant de la carcasse. Le dispositif de guidage interne 31 est ainsi utilisé comme une poutre de détection.

On peut également prévoir au moins trois réalisations qui ne font pas intervenir un tel système de détection avec rétro-pivotement.

Selon une réalisation, la profondeur de coupe sur toute la longueur de la carcasse peut être programmée à l'avance, la lame de scie 17 descendant par exemple verticalement, selon une course identique quelle que soit la carcasse, en prévoyant une distance suffisante en fin de découpe pour que la carcasse ne soit pas entièrement séparée en deux demi carcasses à la fin de la découpe.

Selon une autre réalisation, on programme le déplacement de la lame de coupe en fonction des dimensions de chaque animal mesurées avant la découpe, en particulier la longueur : la course de la lame de coupe est définie en fonction d'une loi mathématique statistique.

Selon une autre réalisation, la profondeur de coupe est réglée en cours de découpe au fur et à mesure de la descente de l'organe de coupe, la poutre porteuse 27 se déplaçant selon la direction transversale Z, en reculant au fur et à mesure, c'est à dire en s'éloignant des deux demi-carcasses en formation.

Dans certains cas, la lame de scie tend à ramener la carcasse vers la colonne de découpe, en se retirant vers cette colonne. On peut alors prévoir un dispositif tel que celui décrit dans le document EP-801 900, pour repousser la carcasse 2, vers le dispositif de guidage externe 43, de manière à la dégager de l'organe de coupe 17. On utilise par exemple un détecteur et un moyen de commande. Par exemple, le détecteur et le moyen de commande ne sont qu'un et sont constitués par un actionneur de type rectiligne tel qu'un vérin à double effet incorporant un capteur de position. Le capteur peut être constitué par une liaison magnétique entre le cylindre et le piston du vérin, ou par un détecteur de variation de la pression d'un fluide d'alimentation allant dans la chambre du vérin opposée à la chambre traversée par la tige de piston qui est liée par un axe à la partie inférieur du palonnier 34 du dispositif de guidage interne 31. L'actionneur peut être de type pneumatique ou hydraulique, son circuit d'alimentation à simple ou double effet.
Compte tenu de la conformation de la phase dorsale interne de la carcasse 2, le détecteur admet une plage de non-réponse correspondant à l'amplitude du développement habituel du palonnier 34 amené à suivre la conformation locale du rachis ou de la colonne vertébrale.

Le rétro-pivotement dans le sens de la flèche f1 (figure 3^{e}) active le capteur qui asservit le distributeur de manière à assurer l'alimentation de la chambre de l'actionneur pour commander, en réponse à ce rétro-pivotement un anté-pivotement dans le sens de la flèche f2 comme illustré sur la figure 3f. La masse pendulaire constituée par la carcasse en partie découpée subit alors une action et un déplacement dans le sens f3 pour éloigner l'extrémité inférieure non fendue de la zone d'action de l'organe de coupe 17. Des cornes 84 permettent de repousser la carcasse 2.

Il subsiste ainsi une zone de liaison entre les deux demi carcasses par ailleurs séparées.

On décrit maintenant un troisième mode de réalisation de l'invention, selon lequel l'organe de guidage interne a une structure différente de celui du premier et du deuxième modes de réalisation.

Le cycle de fonctionnement selon ce mode de réalisation de l'installation est illustré par les figures 4a à 4h.

Le dispositif de guidage 31 est porté par le châssis de support 42, en dessous et légèrement en retrait de l'organe de coupe 17. Il comprend un bras 71 qui porte, par un axe de pivotement horizontal 72, un levier 73 qui supporte une paire de galets inférieurs 74 (figure 6). Le bras 71 porte également une paire de galets supérieurs 75. Le bras 71 étant fixe, la position des galets supérieurs 75 est fixe par rapport à la scie 17, contrairement aux galets mobiles 74 mobiles. Cette position fixe des galets 75 permet un bon guidage interne de la carcasse.

Les galets 74 et 75 de l'organe de guidage interne 31 sont orientés en appui contre la face interne dorsale le long de la colonne vertébrale en vue de réaliser le guidage interne de la carcasse par rapport à l'organe de coupe 17. En vis-à-vis, le dispositif de guidage 43 comprenant le palonnier 58 vient en appui sur la face dorsale externe 53 de manière antagoniste à l'organe de guidage interne 31.

Comme dans le premier mode de réalisation décrit, pour la découpe dite américaine destinée à obtenir deux demi-carcasses non séparées totalement, on détecte la partie extrême basse 69 de la carcasse.

La détection se fait consécutivement au rétro-pivotement du levier 73, et est suivie du retrait de la poutre porteuse 27, la descente de la lame de coupe 17 selon l'axe Y étant arrêtée.

L'organe de guidage interne comprend un piston 76 et une tige de piston 77 qui est liée par un axe 78 à la partie inférieure 79 du levier 73. On peut interposer un détecteur 80 et un moyen de commande 81. Par exemple le détecteur 80 et le moyen de commande 81 ne font qu'un et sont constitués par un actionneur de type rectiligne tel qu'un vérin à simple ou à double effet incorporant un capteur de position par exemple formé par une liaison magnétique entre le cylindre 82 et le piston 76 de la tige de piston 77.

Compte tenu de la conformation de la face dorsale interne de la carcasse, le détecteur 80 admet une plage de non-réponse correspondant à l'amplitude de pivotement habituelle du levier 73 amené à suivre la conformation locale du rachis ou de la colonne vertébrale.

Lorsqu'à partir de la position illustrée par la figure 4e, le déplacement de la poutre porteuse 27 amène l'organe de guidage interne 31 à proximité de la partie extrême 69 de la carcasse constituée dans l'exemple par la partie cervicale en l'absence de tête, les galets inférieurs 74 échappent de la carcasse comme cela est illustré sur la figure 4f, de sorte que le levier 73 est sollicité en rétro-pivotement dans le sens de la flèche f'1 sur une plage angulaire nettement supérieure à celle de la fluctuation qu'il connaît lors du suivi du rachis. Un tel système est applicable même en présence de la tête.

Dans la réalisation présentée, le bras 71 comprend une face inférieure rectiligne 85 inclinée d'environ 10° par rapport à l'horizontale, et une face supérieure 86 comprenant deux segments 87, 88 incliné entre eux d'un angle β de l'ordre de 10°.

On décrit maintenant le dispositif de protection 89 des jambons, qui sont la partie la plus valorisée des carcasses de porc.

Ce dispositif 89 comprend, de chaque côté de la carcasse :
- une tige support fixe 90,
- un bras articulé 91 monté pivotant sur la tige support 90 selon l'axe de pivotement longitudinal 92,
- un vérin de commande 93 relié à la partie médiane 94 du bras articulé 91.

Le bras articulé 91 présente à sa partie extrême libre 95 un ergot 96.

Cet ergot 96 est destiné, par pivotement du bras articulé 91 à venir se loger dans un réceptacle 97 appartenant à une tige de fixation 98 solidaire du châssis de découpe 14.

Lorsque le vérin 93 est en position longue, le bras articulé 91 pivote pour venir en position sensiblement horizontale, l'ergot 96 se logeant dans le réceptacle 97. L'écart entre les deux bras articulés 91 est supérieur à la dimension transversale de la scie, les deux bras définissant ainsi un passage pour la scie. Quand les bras 91 s'abaissent, ils entrent en contact avec les faces internes de la carcasse 2, obligeant les jambons à s'écarter d'une distance supérieure à la distance séparant les faces externes des bras.

Ce dispositif 89 se met en place lors du début du cycle de fonctionnement de l'installation. Les ergots 96 sont maintenus logés dans les réceptacles lors de la découpe. Les ergots sont délogés à la fin de cette découpe pour revenir en position initiale pour la carcasse suivante. Le dispositif de protection 89 est mobile en translation selon l'axe X.

Le dispositif de protection favorise comme l'embase 44, la découpe, dans la mesure où il renforce la liaison entre la colonne d'appui mobile 15 et la colonne de découpe mobile 14.

On note également que des moyens de solidarisation tels qu'une poutre de raccord reliant les colonnes 14, 15 par le haut en plus de la liaison par la bas, peut être utilisé si l'encombrement de l'installation le permet en fonction des caractéristiques du convoyeur et de la charpente.

D'autres modes de réalisation de l'installation selon un mode dynamique, non décrits en détail, sont dans le cadre de l'invention. Par exemple l'outil de découpe n'est pas une scie rotative mais comprend des couteaux de découpe portés par la poutre porteuse.

On a décrit en détail une colonne élévatrice mobile horizontalement supportant un chariot de découpe mobile verticalement. Toutefois on peut utiliser à la place de la colonne élévatrice 15 un châssis élévateur formant un cadre de dimensions voisines de la section du portique 13, ce cadre étant entouré par le portique 13. La poutre porteuse de l'organe de coupe est alors supportée par ce châssis élévateur, et mobile selon la direction longitudinale, parallèle à la direction de défilement par rapport à ce châssis élévateur. De même, pour l'ensemble de guidage externe dorsal 11, celui-ci comprend dans ce cas un cadre châssis entouré par le portique 14 et mobile verticalement. Ce cadre châssis de guidage externe supporte l'organe de guidage externe qui est mobile horizontalement, selon la direction X par rapport à ce cadre châssis de guidage externe. Mais dans une telle configuration de l'ensemble de coupe et de l'ensemble d'appui externe, pour que la colonne de découpe et la colonne d'appui forment un chassis monobloc, tout en autorisant le convoyage des carcasses, les moyens de solidarisation peuvent se présenter sous forme d'une embase en forme de U se déplaçant dans une cavité du sol aménagée à cet effet.

Concernant les déplacements horizontaux et verticaux des châssis mobiles, on peut utiliser des systèmes de type courroie/câble.

De plus, grâce au fonctionnement indépendant de l'organe de découpe et de l'organe de guidage externe, l'espace entre les deux organes peut être ajusté selon les besoins, notamment pour la découpe de coches ou de veaux qui nécessite souvent une lame de scie d'un diamètre de l'ordre de 450 mm.

En outre, cette installation est également adaptée pour des découpes spécifiques. Par exemple, on peut effectuer une découpe de la carcasse avec le palonnier 58, la longe étant désossée (dégagement des apophyses), après ouverture du gras et séparation de la viande des deux côtés, et avant la découpe, notamment pour la fabrication de bacon canadien ou de lonzo italien. La découpe est excellente et permet de couper avec précision toutes les apophyses.

## Revendications

1. Installation (1) à poste mobile de découpe de carcasses (2) d'animaux de boucherie, notamment les porcs, suspendus à un transporteur (4) par les pattes arrière (3), comprenant deux colonnes (14, 15) en vis à vis définissant entre elles un espace dans lequel défilent en continu les animaux à découper, ces deux colonnes (14, 15) étant mobiles suivant une certaine course dans la direction de déplacement des carcasses, et dans la direction inverse, l'une des colonnes (15) dite d'appui portant un dispositif d'appui (43) comportant des moyens (50, 58) venant en appui sur la face externe dorsale de la carcasse au niveau de la colonne vertébrale, suivant la découpe, l'autre colonne dite de découpe (14) portant d'autre part un dispositif de découpe (17) comportant des moyens de découpe (17) introduits par la face ventrale sous la queue, et mobile verticalement, et d'autre part un dispositif de guidage interne (31) comportant des moyens de guidage situés sous les moyens de découpe (17) introduits par le côté ventral de la carcasse en agissant à l'encontre des moyens d'appui (50, 58), l'installation comprenant un dispositif de commande et d'asservissement du déplacement du dispositif de guidage interne (31), du dispositif d'appui (43) et du dispositif de découpe (17), le dispositif de commande et d'asservissement étant apte à permettre un déplacement indépendant des moyens d'appui (50, 58) et des moyens de découpe (17), les moyens d'appui étant mobiles verticalement lors de la découpe.

2. Installation selon la revendication 1 **caractérisée en ce qu'**elle comprend des moyens de solidarisation (44) de la colonne de découpe (14) et de la colonne d'appui (38), la colonne de découpe et la colonne d'appui formant un ensemble monobloc, de manière à assurer le positionnement souhaité, en vis-à-vis, des moyens d'appui externe, des moyens de découpe et des moyens de guidage interne lors de la découpe.

3. Installation selon la revendication 2 **caractérisée en ce que** la colonne de découpe (14) comprend une colonne (15) élévatrice mobile en translation parallèlement à la direction horizontale de défilement des carcasses à l'aide de premiers moyens d'entraînement (21), un chariot élévateur (16) mobile en translation verticale par rapport à la colonne mobile (15) à l'aide de deuxièmes moyens d'entraînement (25), et une poutre porteuse (27) du dispositif de découpe, mobile par rapport au chariot élévateur (16) pour être amenée à partir d'une position d'effacement à une position de découpe, à l'aide de troisièmes moyens d'entraînement, les premiers (21), deuxièmes (25) et troisièmes moyens d'entraînement étant distincts et reliés à un automate du dispositif de commande et d'asservissement qui commande également l'actionnement des moyens de découpe.

4. Installation selon la revendication 3 **caractérisée en ce que** la colonne d'appui (38) comprend un châssis élévateur mobile (39) parallèlement à la direction horizontale de défilement à l'aide de quatrième moyens d'entraînement (45), un châssis de support du dispositif d'appui (43), mobile verticalement par rapport au châssis élévateur (39) à l'aide de cinquièmes moyens d'entraînement (46), les moyens de solidarisation (44) reliant la colonne mobile et le châssis élévateur par le haut ou par le bas, les quatrièmes et cinquièmes moyens d'entraînement (46) étant distincts et reliés au distributeur automate du dispositif de commande et d'asservissement qui commande également l'actionnement de l'organe de coupe.

5. Installation selon la revendication 2 **caractérisée en ce que** la colonne de découpe (14) comprend un premier châssis élévateur mobile en translation verticale par rapport à une structure fixe (13), supportant un châssis de découpe mobile en translation horizontale par rapport au premier châssis élévateur parallèlement à la direction de défilement des carcasses, le châssis de découpe supportant la poutre porteuse de l'organe de coupe elle même mobile transversalement à la direction de défilement des carcasses.

6. Installation selon la revendication 5 **caractérisée en ce que** la colonne d'appui (38) comprend un second châssis élévateur, mobile en translation verticale, supportant le châssis d'appui externe mobile en translation horizontale par rapport au second châssis élévateur, le châssis d'appui (38) supportant l'organe de guidage mobile transversalement à la direction de défilement des carcasses, les moyens de solidarisation de l'ensemble monobloc formé par la colonne de découpe et la colonne d'appui pouvant se déplacer dans une gorge située dans le sol.

7. Installation selon l'une quelconque des revendications 3 à 6, **caractérisée en ce que** les troisièmes moyens d'entraînement comprennent un vérin (99) entrée/sorite permettant le déplacement relatif des moyens de guidage interne par rapport aux moyens de découpe.

8. Installation selon l'une quelconque des revendications 1 à 7, **caractérisée en ce que** le dispositif de guidage (31) interne comprend deux galets de guidage supérieurs (35) et deux galets de guidage inférieurs (36, 74) montés sur un même bras de support, et le dispositif d'appui comprend un palonnier externe (50, 58) d'appui escamotable à partir d'une position de dégagement à une position d'appui contre la face dorsale (53) de la carcasse, le palonnier (50, 58) portant deux galets d'appui supérieurs (52, 62, 64) et deux galets d'appui inférieurs (51, 63, 65), les galets d'appui étant antagonistes des galets de guidage.

9. Installation selon l'une quelconque des revendications 1 à 8, **caractérisée en ce que** le dispositif de commande comprend des moyens de contrôle de la position des moyens de découpe (17) et des moyens d'appui (50, 58), et est apte à commander les moyens d'entraînement (21, 25, 29, 45, 46) selon des profils de vitesse et/ou de position prédéterminés, ou calculés pour chaque carcasse.

10. Installation selon la revendication 9, **caractérisée en ce que** les moyens de contrôle comprennent un dispositif de détection (34, 73) de la partie extrême basse (69) de la carcasse apte à commander le recul des moyens de découpe (17).

11. Installation selon la revendication 10, **caractérisée en ce que** le dispositif de détection comprend un élément émetteur de faisceau lumineux porté par un bras fixé à la poutre porteuse, et un élément récepteur fixé à la partie inférieure du châssis de support de l'organe de guidage interne, de manière que la carcasse à découper intercepte le faisceau lumineux jusqu'à la position souhaitée de découpe

12. Installation selon la revendication 10, **caractérisée en ce que** le dispositif de détection comprend deux galets inférieurs (35, 74) montés sur un moyen de détection actionné par une tige de vérin, le déplacement du moyen de détection jusqu'à une position seuil commandant le recul des moyens de découpe .

13. Installation selon la revendication 12, **caractérisée en ce que** le moyen de détection est un palonnier (34) portant les galets supérieurs (35) de guidage et les galets inférieurs de guidage (36), l'axe de rotation des galets inférieurs et l'axe de rotation des galets supérieurs des moyens de guidage étant mobiles par rapport à 1 'axe de rotation de l'organe de découpe (17).

14. Installation selon la revendication 12, **caractérisée en ce que** le moyen de détection est un levier (73) portant les galets inférieurs (74) de guidage, l'axe de rotation des galets supérieurs (75) étant fixe par rapport à l'axe de rotation de l'organe de coupe, tandis que l'axe de rotation des galets inférieurs est mobile par rapport à l'axe de rotation de l'organe de coupe.

15. Installation selon l'une quelconque des revendications 8 à 14, **caractérisée en ce que** l'axe de rotation des galets (51, 52) du palonnier externe d'appui 50 lors de la découpe est sensiblement parallèle à la face dorsale de la carcasse.

16. Installation selon l'une quelconque des revendications 9 à 15, **caractérisée en ce que** l'axe de rotation des galets (62, 63, 64, 65) du palonnier externe d'appui (58) lors de la découpe est dirigé vers, en faisant un angle voisin de 45° avec, la face dorsale de la carcasse, les galets étant tronconiques, permettant un recentrage des chairs et des apophyses avant le passage de la lame de scie

17. Installation selon l'une quelconque des revendications 1 à 16, **caractérisé en ce que** l'organe de coupe comprend une scie rotative de 300 à 600 mm de diamètre, utilisable notamment pour les coches et les veaux, ou des couteaux de fendage.

18. Installation selon l'une quelconque des revendications 1 à 17, **caractérisé en ce qu'**elle comprend un dispositif de protection (84) des jambons de la carcasse, comportant des moyens de protection (91) escamotables, portés par la colonne élévatrice fixes par rapport à la carcasse, destinés par un mouvement de basculement ou autre par dessus les jambons, à coopérer avec au moins une zone de réception (97) fixe par rapport à la carcasse de la colonne d'appui, de manière à maintenir écartés les jambons en évitant leur contact non souhaité avec la poutre porteuse (71).

19. Procédé mettant en oeuvre une installation selon l'une quelconque des revendications 1 à 18, **caractérisé en ce qu'**il comprend les étapes de :
- mesure de la carcasse, le corps de l'animal étant entier, avec ou sans tête, non fendu du côté de la colonne vertébrale, et détection du début de la découpe ;
- actionnement du dispositif de commande et d'asservissement ;
- déplacement conséquemment de la colonne de découpe (14) et de la colonne d'appui (38), de manière à déplacer le dispositif de découpe (17) et le dispositif d'appui (43) dans les trois directions de l'espace, les moyens d'appui (50, 58) étant appliqués contre la face dorsale externe de l'animal et l'organe de découpe (17) effectuant la découpe, la carcasse étant déplacée simultanément à la découpe ;
- détection de la position de fin de découpe ;
- arrêt de la découpe, évacuation de la carcasse découpée et retour en position initiale de l'organe de coupe et de l'organe d'appui pour la carcasse suivante.

20. Procédé selon la revendication 19, **caractérisé en ce que** la détection de fin de découpe est effectuée en fonction de l'application du dispositif de guidage interne (31) sur la partie extrême terminale (69) de la carcasse.

21. Procédé selon la revendication 19 **caractérisé en ce que** l'on réalise un déplacement relatif du dispositif de découpe et du dispositif de guidage externe selon une direction générale verticale et un sens tels que les moyens de guidage externe assurent un guidage externe jusqu'à la fin de la découpe.

## Patentansprüche

1. Anlage (1) mit beweglicher Schneidstation zum Zerteilen von Tierkörpern für Schlachthäusern, insbesondere von Schweinen, die an den hinteren Beinen (3) an einer Transportvorrichtung (4) aufgehängt werden, mit zwei gegenüberstehenden Säulen (14, 15), die jenen Bereich abgrenzen, den die zu zerteilenden Tiere kontinuierlich durchlaufen, wobei diese beiden Säulen (14, 15) in Richtung eines bestimmten Weges in gleicher und entgegengesetzter Tierkörpertransportrichtung verschieblich sind, wobei eine Säule (15) bzw. die Stützsäule eine Stützvorrichtung (43) mit Mitteln (50, 58) aufweist, die nach Zerteilung auf der Außenseite des Tierkörperrückens an der Wirbelsäule aufliegen, wobei die andere Säule (14) bzw. die Schneidsäule einerseits eine Schneidvorrichtung mit unterhalb des Tierschwanzes in die Bauchseite angesetzten und vertikal verschieblichen Schneidmitteln (17) und andererseits eine interne Führungsvorrichtung (31) mit an der Bauchseite des Tierkörpers angesetzten, gegen die Stützvorrichtung (50, 58) wirkenden, unterhalb der Schneidmittel (17) befindlichen Führungselementen aufweist, wobei die Anlage mit einer Steuer- und Regelungsvorrichtung zur Steuerung der Bewegung der internen Führungsvorrichtung (31), der Stützvorrichtung (43) und der Schneidvorrichtung (17) versehen ist, wobei die Steuer- und Regelungsvorrichtung so ausgebildet ist, dass sie eine Bewegung unabhängig von den Stützmitteln (50, 58) und den Schneidmitteln (17) ermöglicht, wobei beim Schneidvorgang die Schiebeelemente sich vertikal bewegen.

2. Anlage nach Anspruch 1, **gekennzeichnet dadurch, dass** sie Verbindungsmittel (44) für die Schneid- (14) und Stützsäule (38) aufweist, wobei die Schneid- und Stützsäule aus einem Teil ausgebildet sind, so dass beim Schneidvorgang die gewünschte gegenüberliegende Positionierung der äußeren Stützelemente, der Schneidmittel und der internen Führungsmittel gesichert ist.

3. Anlage nach Anspruch 2, **gekennzeichnet dadurch, dass** die Schneidsäule (14) eine mit ersten Antriebsmitteln (21), parallel zu den horizontal durchlaufenden Tierkörpern bewegliche Hubsäule (15), ein mit zweiten Antriebsmitteln (25) vertikal zur beweglichen Säule (15) verschieblicher Hubschlitten (16) und ein mit dritten Antriebsmitteln relativ zur Hebevorrichtung (16) verschieblicher, aus einer Ruheposition in eine Schneidposition zu führender Trägerbalken für die Schneidvorrichtung (27) aufweist, wobei die ersten (21), zweiten (25) und dritten Antriebsmittel gesondert ausgebildet sind und mit einem ebenfalls die Betätigung der Schneidmittel leitenden Automaten der Steuer- und Regelungsvorrichtung gekoppelt sind.

4. Anlage nach Anspruch 3, **gekennzeichnet dadurch, dass** die Stützsäule (38) einen mittels vierten Antriebsmitteln (45) parallel zu den horizontal durchlaufenden Tierkörpern verschieblichen Hubrahmen (39), einen mittels fünften Antriebsmitteln (46) vertikal zum Hubrahmen (39) verschieblichen Stützrahmen der Stützvorrichtung (43) aufweist, wobei die Verbindungsmittel (46) die bewegliche Säule und der Hubrahmen von oben bzw. von unten miteinander verbindet, wobei die vierten und fünften Antriebsmittel gesondert ausgebildet sind und mit einem ebenfalls die Betätigung der Schneidmittel leitenden Automaten der Steuer- und Regelungsvorrichtung gekoppelt sind.

5. Anlage nach Anspruch 2, **gekennzeichnet dadurch, dass** die Schneidsäule (14) einen ersten vertikal zu einer festen Struktur (13) verschieblicher Hubrahmen, der ein horizontal zu diesem und parallel zu den durchlaufenden Tierkörpern bewegliches Schneidgestell aufweist, wobei das Schneidgestell den Trägerbalken der Schneide trägt, welches selbst quer zu den durchlaufenden Tierkörpern beweglich ist.

6. Anlage nach Anspruch 5, **gekennzeichnet dadurch, dass** die Stützsäule (38) einen zweiten vertikal verschieblichen Hubrahmen aufweist, der den externen horizontal zum zweiten Hubrahmen verschieblichen Stützrahmen trägt, wobei der Stützrahmen (38) den quer zur Durchlaufrichtung der Tierkörper verschieblichen Führungsglied trägt, wobei die Verbindungsmittel der aus einem Teil ausgebildeten Schneid- und Stützsäule in einer Nute im Boden verschieblich sind.

7. Anlage nach einem der Ansprüche 3 bis 6, **gekennzeichnet dadurch, dass** die dritten Antriebsmittel einen Eingangs/Ausgangszylinder (99) aufweisen, welcher die Relativbewegung der internen Führungselemente im Verhältnis zu den Schneidmitteln ermöglicht.

8. Anlage nach einem der Ansprüche 1 bis 7, **gekennzeichnet dadurch, dass** die interne Führungsvorrichtung (31) zwei oberen (35) und zwei unteren (36, 74) Führungsrollen aufweist, die auf einem einzigen Trägerarm befestigt sind, und die Stützvorrichtung eine von einer Ruhestellung in eine Stützstellung gegen die Rückenseite der Tierkörper bringbare externe Krantraverse (50, 58) aufweist, wobei die Krantraverse (50, 58) zwei oberen Stützrollen (52, 62, 64) und zwei unteren Stützrollen (51, 63, 65) trägt, wobei die Stützrollen entgegen die Führungsrollen wirken.

9. Anlage nach einem der Ansprüche 1 bis 8, **gekennzeichnet dadurch, dass** die Steuervorrichtung Überwachungsmittel für die Stellung der Schneidmittel (17) und der Stützelemente (50, 58) aufweist und so ausgebildet ist, dass sie die Antriebsmittel (21, 25, 29, 45, 46) hinsichtlich vorbestimmten oder berechneten Geschwindigkeits- und/oder Stellungsprofile der Tierkörper steuert.

10. Anlage nach Anspruch 9, **gekennzeichnet dadurch, dass** die Überwachungsmittel eine Erkennungsvorrichtung (34, 73) für den äußersten unteren Endbereich (69) des Tierkörpers aufweist, welche die Rückbewegung der Schneidelemente (17) auslösen kann.

11. Anlage nach Anspruch 10, **gekennzeichnet dadurch, dass** die Erkennungsvorrichtung ein Lichtstrahl-Sendeelement, das durch einen am Trägerbalken befestigten Arm gehalten wird, und ein am unteren Teil des Trägergestells des internen Führungsglieds angebrachten Empfängerelement aufweist, so dass der zu zerteilende Tierkörper den Lichtstrahl bis zur gewünschten Schneidposition abfängt.

12. Anlage nach Anspruch 10, **gekennzeichnet dadurch, dass** die Erkennungsvorrichtung zwei auf einem durch eine Zylinderstange betätigten Erkennungsmittel angeordneten unteren Rollen (35, 74) aufweist, wobei die Bewegung des Erkennungsmittels bis zu einer Grenzposition die Rückbewegung der Schneidmittel steuert.

13. Anlage nach Anspruch 12, **gekennzeichnet dadurch, dass** die Erkennungsvorrichtung eine Krantraverse (34) mit oberen (35) und unteren (36) Führungsrollen ist, wobei die Drehachse der unteren Rollen und die Drehachse der oberen Rollen der Führungsmittel bezogen auf die Drehachse des Schneidmittels (17) verschieblich sind.

14. Anlage nach Anspruch 12, **gekennzeichnet dadurch, dass** die Erkennungsvorrichtung ein mit den unteren Führungsrollen (74) versehenen Hebel (73) ist, wobei die Drehachse der oberen Rollen (75) bezogen auf die Drehachse des Schneidmittels fest ist, während die Drehachse der unteren Rollen bezogen auf die Drehachse des Schneidmittels verschieblich ist.

15. Anlage nach einem der Ansprüche 8 bis 14, **gekennzeichnet dadurch, dass** beim Schneidvorgang die Drehachse der Rollen (51, 52) des externen Stützbalkens (50) sich im wesentlichen parallel zum Rücken des Tierkörpers erstreckt.

16. Anlage nach einem der Ansprüche 9 bis 15, **gekennzeichnet dadurch, dass** beim Schneidvorgang die Drehachse der Rollen (62, 63, 64, 65) der externen Krantraverse (58) mit einem Winkel von etwa 45° auf die Rückenseite des Tierkörpers gerichtet ist, wobei die Rollen kegelstumpfförmig ausgebildet sind, wodurch eine Neuzentrierung der Fleischteile und Knochenfortsätze vor dem Durchlauf des Sägeblatts möglich ist.

17. Anlage nach einem der Ansprüche 1 bis 16, **gekennzeichnet dadurch, dass** das Schneidmittel eine Kreissäge, besonders für Schweine und Kälber anwendbar, mit einem Durchmesser von 300 bis 600 mm oder Schlitzmesser aufweist.

18. Anlage nach einem der Ansprüche 1 bis 17, **gekennzeichnet dadurch, dass** sie eine Schutzvorrichtung (84) für die Keulen der Tierkörper mit ausfahrbaren, an der Hubsäule befestigten und bezogen auf den Tierkörper festen Schutzelementen (91) aufweist, die durch eine Kipp- oder sonstige Bewegung über den Keulen mit mindestens einen bezogen auf den an der Stützsäule befestigten Tierkörper festen Empfangsbereich (97) so zusammenwirken, dass die Keulen auseinandergehalten werden, indem ein unerwünschter Kontakt letzterer mit dem Trägerbalken (71) verhindert wird.

19. Verfahren mit Einsatz einer Anlage nach einem der Ansprüche 1 bis 18, **gekennzeichnet dadurch, dass** folgende Arbeitsschritte vorgesehen werden:
- Messung des noch nicht an der Wirbelsäule gespaltenen, also ganzen Tierkörpers mit oder ohne Kopf und Anfangserkennung des Schneidvorgangs;
- Betätigung der Steuer- und Regelungsvorrichtung;
- entsprechende Bewegung der Schneidsäule (14) und der Stützsäule (38), so dass die Schneidvorrichtung (17) und die Stützvorrichtung (43) in die drei Raumrichtungen bewegt werden, wobei die Stützmittel (50, 58) gegen die Außenseite des Tierrückens angelegt werden, und wobei das Schneidmittel (17) den Schneidvorgang vornimmt, wobei der Tierkörper gleichzeitig zum Schneidvorgang bewegt wird;
- Enderkennung des Schneidvorgangs;
- Anhalten des Schneidvorgangs, Herausnehmen des zerteilten Tierkörpers und Zurückführen des Schneid- und Stützelements in die Ausgangsstellung für das nächste Tier.

20. Verfahren nach Anspruch 19, **gekennzeichnet dadurch, dass** die Enderkennung des Schneidvorgangs abhängig von dem Anbringen der internen Führung (31) gegen den äußersten Endbereich des Tierkörpers (69) erfolgt.

21. Verfahren nach Anspruch 19, **gekennzeichnet dadurch, dass** eine Relativbewegung der Schneidvorrichtung und der externen Führungsrichtung in eine allgemeine vertikale Richtung und in eine Richtung, in der die externen Führungselemente bis zum Ende des Schneidvorgangs eine externe Führung sichern, durchgeführt wird.

## Claims

1. An installation (1) of the moving station type for cutting up carcasses (2) of slaughtered animals, in particular pigs, suspended from a transporter (4) by the hind legs (3), comprising two pillars (14, 15) facing one another defining between them a space in which the animals to be cut up move past continuously, these two pillars (14, 15) being movable along a certain path in the direction of motion of the carcasses, and in the reverse direction, one of the pillars (15) referred to as the abutment pillar carrying an abutment device (43) having means (50, 58) coming into abutment on the dorsal external face of the carcass in the region of the vertebral column, following the cutting up, the other pillar referred to as the cutting-up pillar (14) carrying on the one hand a cutting-up device (17) having cutting-up means (17) introduced by the ventral face under the tail, and movable vertically, and on the other hand an internal guidance device (31) having guidance means situated beneath the cutting-up means (17) introduced by the ventral side of the carcass, acting against the abutment means (50, 58), the installation comprising a device for commanding and interlocking the movement of the internal guidance device (31), the abutment device (43) and the cutting-up device (17), the command and interlock device being capable of allowing an independent movement of the abutment means (50, 58) and the cutting-up means (17), the abutment means being movable vertically during the cutting up.

2. An installation according to Claim 1, **characterised in that** it comprises means of unifying (44) the cutting-up pillar (14) and the abutment pillar (38), the cutting-up pillar and the abutment pillar forming a single-piece assembly, so as to provide the desired positioning, opposite one another, of the external abutment means, the cutting-up means and the internal guidance means during the cutting up.

3. An installation according to Claim 2, **characterised in that** the cutting-up pillar (14) comprises a raising pillar (15) movable with a translational motion parallel to the horizontal direction of movement of the carcasses by means of first driving means (21), a raising carriage (16) movable with a vertical translational motion with respect to the movable pillar (15) by means of second driving means (25), and a carrying beam (27) for the cutting-up device, movable with respect to the raising carriage (16) in order to be conveyed from a retiring position to a cutting-up position, by means of third driving means, the first (21), second (25) and third driving means being separate and connected to an automatic controller of the command and interlock device which also commands the actuation of the cutting-up means.

4. An installation according to Claim 3, **characterised in that** the abutment pillar (38) comprises a raising frame movable (39) parallel to the horizontal direction of movement by means of fourth driving means (45), a support frame for the abutment device (43), movable vertically with respect to the raising frame (39) by means of fifth driving means (46), the unification means (44) connecting the movable pillar and the raising frame by the top or by the bottom, the fourth and fifth driving means (46) being separate and connected to the automatic controller control valve of the command and interlock device which also commands the actuation of the cutting member.

5. An installation according to Claim 2, **characterised in that** the cutting-up pillar (14) comprises a first raising frame movable with a vertical translational motion with respect to a fixed structure (13), supporting a cutting-up frame movable with a horizontal translational motion with respect to the first raising frame parallel to the direction of movement of the carcasses, the cutting-up frame supporting the carrying beam for the cutting member itself movable transversely to the direction of movement of the carcasses.

6. An installation according to Claim 5, **characterised in that** the abutment pillar (38) comprises a second raising frame, movable with a vertical translational motion, supporting the external abutment frame movable with a horizontal translational motion with respect to the second raising frame, the abutment frame (38) supporting the guidance member movable transversely to the direction of movement of the carcasses, the means of unifying the single-piece assembly formed by the cutting-up pillar and- the abutment pillar being capable of moving in a groove located in the ground.

7. An installation according to any one of Claims 3 to 6, **characterised in that** the third driving means comprise an input/output cylinder (99) allowing relative movement of the internal guidance means with respect to the cutting-up means.

8. An installation according to any one of Claims 1 to 7, **characterised in that** the internal guidance device (31) comprises two upper guide rollers (35) and two lower guide rollers (36, 74) mounted on one and the same support arm, and the abutment device comprises an external abutment bar (50, 58) retractable from a free position to a position of abutment against the dorsal face (53) of the carcass, the bar (50, 58) carrying two upper abutment rollers (52, 62, 64) and two lower abutment rollers (51, 63, 65), the abutment rollers being opposed to the guide rollers.

9. An installation according to any one of Claims 1 to 8, **characterised in that** the command device comprises means of controlling the position of the cutting-up means (17) and the abutment means (50, 58), and is capable of commanding the driving means (21, 25, 29, 45, 46) according to speed and/or position profiles which are predetermined or calculated for each carcass.

10. An installation according to Claim 9, **characterised in that** the control means comprise a device for detecting (34, 73) the extreme lower part (69) of the carcass capable of commanding the backward movement of the cutting-up means (17).

11. An installation according to Claim 10, **characterised in that** the detection device comprises a light beam emitting element carried by an arm fixed to the carrying beam, and a receiving element fixed to the lower part of the support frame of the internal guidance member, so that the carcass to be cut up intercepts the light beam up to the desired cutting-up position.

12. An installation according to Claim 10, **characterised in that** the detection device comprises two lower rollers (35, 74) mounted on a detection means actuated by a cylinder rod, the movement of the detection means up to a threshold position commanding the backward movement of the cutting-up means.

13. An installation according to Claim 12, **characterised in that** the detection means is a bar (34) carrying the upper guide rollers (35) and the lower guide rollers (36), the axis of rotation of the lower rollers and the axis of rotation of the upper rollers of the guidance means being movable with respect to the axis of rotation of the cutting-up member (17).

14. An installation according to Claim 12, **characterised in that** the detection means is a lever (73) carrying the lower guide rollers (74), the axis of rotation of the upper rollers (75) being fixed with respect to the axis of rotation of the cutting member, while the axis of rotation of the lower rollers is movable with respect to the axis of rotation of the cutting member.

15. An installation according to any one of Claims 8 to 14, **characterised in that** the axis of rotation of the rollers (51, 52) of the external abutment bar (50) during cutting up is substantially parallel to the dorsal face of the carcass.

16. An installation according to any one of Claims 9 to 15, **characterised in that** the axis of rotation of the rollers (62, 63, 64, 65) of the external abutment bar (58) during cutting up is directed towards the dorsal face of the carcass, making an angle close to 45° therewith, the rollers being in the shape of truncated cones, allowing the flesh and apophyses to be recentred before the passage of the saw blade.

17. An installation according to any one of Claims 1 to 16, **characterised in that** the cutting member comprises a rotary saw of 300 mm to 600 mm in diameter, usable in particular for sows and calves, or slitting knives.

18. An installation according to any one of Claims 1 to 17, **characterised in that** it comprises a device for protecting (84) the thighs of the carcass, having retractable protection means (91), carried by the raising pillar and fixed with respect to the carcass, intended by a tilting or other movement over the thighs, to cooperate with at least one receiving area (97) fixed with respect to the carcass of the abutment pillar, so as to keep the thighs apart, avoiding their undesired contact with the carrying beam (71).

19. A method using an installation according to any one of Claims 1 to 18, **characterised in that** it comprises the steps of:
- measurement of the carcass, the body of the animal being whole, with or without a head, not slit on the vertebral column side, and detection of the start of cutting up;
- actuation of the command and interlock device;
- movement consequently of the cutting-up pillar (14) and the abutment pillar (38), so as to move the cutting-up device (17) and the abutment device (43) in the three directions of space, the abutment means (50, 58) being applied against the external dorsal face of the animal and the cutting-up member (17) performing the cutting up, the carcass being moved simultaneously with the cutting up;
- detection of the end-of-cutting-up position;
- stopping of the cutting up, removal of the cut-up carcass and return to the initial position of the cutting member and the abutment member for the next carcass.

20. A method according to Claim 19, **characterised in that** the end-of-cutting-up detection is performed according to the application of the internal guidance device (31) on the extreme end part (69) of the carcass.

21. A method according to Claim 19, **characterised in that** a relative movement of the cutting-up device and the external guidance device is carried out in a general vertical direction and a sense such that the external guidance means provide external guidance until the end of the cutting up.
